# EUROPEAN PATENT APPLICATION

(11) **EP 2 000 776 A2**
(43) Date of publication of application: **10.12.2008**
(21) Application number: 08251970.3
(22) Date of filing: 06.06.2008
(51) Int. Cl.: G01C 22/00, B60C 23/04

(54) **Tire revolution detecting system**

(30) Priority: 08.06.2007 JP 2007152408
(71) Applicant: Bridgestone Corporation, Tokyo 104-8340 (JP)
(72) Inventor: Toyofuku, Masanobu , c/o Bridgestone Corp. ., Kodaira-shi Tokyo 187-8531 (JP); Kokubu, Takao , c/o Bridgestone Corp. ., Kodaira-shi Tokyo 187-8531 (JP)
(74) Representative: Whalley, Kevin

(57) **Abstract**

A tire revolution detecting system includes an electric power generator (23) and an RF tag (27), both provided for the tire (11). The generator (23) generates electric power under deformation of the tire (11) in contact with the ground. The RF tag (27) includes a memory (29) for storing a data indicative of the number of the tire revolution, and serves to (i) add an increment to the data of the memory (29) and renew the stored data each time when the voltage of the electric power generated by the generator (23) exceed a threshold level, and (ii) transmit the data of the memory (29) to an external communication system (34) when the detecting system is connected to the communication system (34) through wireless communication. The generator (23) and the RF tag (27) are provided, respectively, in a sidewall portion (14) and a bead portion (13) of the tire (11).

## Description

### TECHNICAL FIELD

The present invention relates to a tire revolution detecting system, for detecting the number of tire revolution.

### BACKGROUND ART

A tire revolution detecting system is known, for example, from U.S. Patent No. 7,132,939 B2, which includes an electric power generator provided for a tire, for generating an electric power under a ground-contact deformation of the tire, and a radio-frequency tag ("RF tag") provided for the tire. In this instance, the RF tag includes a memory for storing a data representing the number of revolution the tire has experienced. The RF tag serves to add an increment "1" to the data of the memory and renew the data each time when a voltage of the electric power generated by the generator exceed a predetermined level, and transmit the data of the memory to an external communication system when the tire revolution detecting system is connected to the communication system through a wireless communication. In the known tire revolution detecting system, the electric power generator and the RF tag are integrated with each other and mounted in adhesion to the inner peripheral surface of the tire.

However, in this type of known tire revolution detecting system, since the electric power generator and the RF tag are adhered to a location of the inner peripheral surface of the tire, where the degree of deformation of the tire in contact with the ground is small for the generator and large for the RF tag, there is a serous problem that the generator cannot generate a sufficient electric power, on one hand, and the RF tag is liable to get damages and suffers from a short duration of life, on the other hand.

### DISCLOSURE OF THE INVENTION

### (Task of the Invention)

It is therefore a primary object of the present invention to provide an improved tire revolution detecting system, which allows the electric power generator to generate a sufficient level of electric power, and at the same time ensures a long duration of life of the RF tag.

### (Means for Solving the Task)

To this end, according to the present invention, there is provided a tire revolution detecting system comprising: an electric power generator provided for a tire, for generating an electric power under a ground-contact deformation of the tire; and an RF tag provided for the tire, and including a memory for storing a data representing the number of revolution the tire has experienced, said RF tag being for adding a predetermined increment to the data of the memory and renewing the data each time when a voltage of the electric power generated by the electric power generator exceed a predetermined level, and for transmitting the data of the memory to an external communication system, when the tire revolution detecting system is connected to the external communication system through a wireless communication; wherein the electric power generator is provided in a sidewall portion of the tire, and the RF tag is provided in a bead portion of the tire.

### (Effects of the Invention)

According to the present invention, the electric power generator is arranged in the sidewall portion of the tire, where the degree of deformation of the tire in contact with the ground is the maximum. It is therefore readily possible for the electric power generator to generate electric power of a sufficient level. On the other hand, the RF tag comprising sensitive electronic components is arranged in the bead portion of the tire, where the degree of deformation of the tire in contact with the ground is the minimum.
It is therefore readily possible to minimize the stresses exerted to the RF tag from the tire, thereby ensuring a prolonged duration of life of the RF tag.

It is preferred that the electric power generator comprises a piezoelectric element, which is compressed by a deformation of the sidewall portion of the tire when the tire is in contact with the ground, to generate the electric power. In this instance, the electric power generator can be made simple in structure and low in cost.

It is preferred that the external communication means comprises one of a tag reader and a tag reader/writer. In this instance, a tag reader or a tag reader/writer which are readily available in the marketplace can be used as it is, as the external communication means.

It is preferred that the electric power generator is fixedly secured to an inner surface of the sidewall portion of the tire, and the RF tag is fixedly secured to an inner surface of the bead portion of the tire. In this instance, the electric power generator and the RF tag can be readily secured to the tire while effectively avoiding their damages.

### BRIEF DESCRIPTION OF THE DRAWIIVGS

The present invention will be described below with reference to a preferred embodiment shown in the accompanying drawings, wherein:
FIG 1 is a meridian-sectional view of a tire/rim assembly to which the present invention can be applied;
FIG 2 is a block diagram of the tire revolution detecting system according to a preferred embodiment of the present invention; and
FIG 3 is a graph showing the magnitude of electric power generated.

### (Reference Numerals)

11 ... Tire
13 ... Bead portion
14 ... Sidewall portion
23 ... Electric power generator
27 ... RF tag
29... Memory
34... Communication system

### BEST MODE FOR CARRYING OUT THE INVENTION

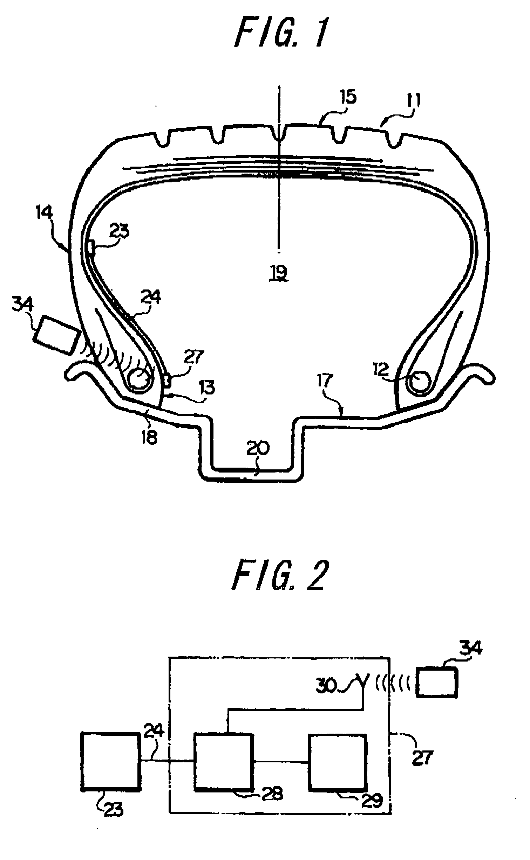

In FIGS. 1 and 2, reference numeral 11 denotes a pneumatic tire that includes a pair of bead portions 13 each being embedded with a bead core 12, a pair of sidewall portions 14 extending radially outwards from the relevant bead portions 13, and a substantially cylindrical tread portion 15 connecting the radially outer edges of the sidewall portions 14.

Reference numeral 17 denotes a rim, on which the tire 11 is mounted. The rim 17 includes a pair of bead seat portions 18, on which the bead portions 13 of the tire 11 are seated. Air under a prescribed pressure is filled in the internal chamber 19 of the tire 11, which is circumscribed by the tire 11 and the rim 17. Reference humeral 29 denotes an annular drop portion that is provided for the rim 17 between the bead seat portions 18 so as to be recessed radially inwards.

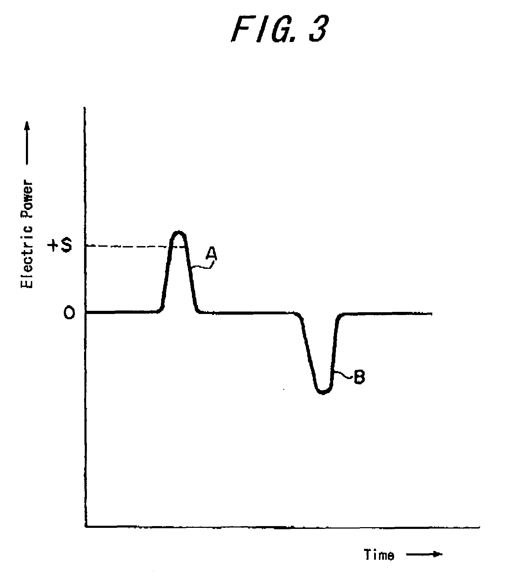

Reference numeral 23 denotes an electric power generator, which is provided for the tire 11 as being fixedly secured to the inner surface of the tire 11 in the sidewall portion 14 at, or adjacent to the maximum width region of the tire 11. The generator 23 includes a piezoelectric element comprised of zinc-oxide or titania-zirconia-lead. The generator 23 electric power when the tire 11 in contact with the ground revolves and the region of the sidewall portion 14 provided with the generator 23 undergoes periodical deformation during the running of a vehicle to which the tire is mounted. More particularly, as shown in FIG 3, during each turn of the tire revolution, when the region of the sidewall portion 14 provided with the generator 23 is brought to the stepping-in side and undergoes a crushing deformation, electric power A is generated by the generator 23 as a single pulse of positive voltage, and when the region of the sidewall portion 14 provided with the generator 23 is brought to the kicking-out side and undergoes a restoring deformation, electric power B is generated by the generator 23 as a single pulse of negative voltage.

By arranging the generator 23 on the inner surface of the sidewall portion 14 of the tire 11, the generator 23 can be more positively protected from damages as compared to the arrangement on the outer surface of the tire 11, and can be more easily installed as compared to an embedding arrangement inside the tire 11. Furthermore, the generator 23 comprised of a piezoelectric element is simple in structure and can be produced at low cost.

Reference numeral 27 denotes a radio-frequency tag ("RF tag"), which is provided for the tire 11 as being fixedly secured to the inner surface of the tire 11 in the bead portion 13. The RF tag 27 includes a controller 28 in the form of an IC chip, which comprises a pulse sensor, a central processing unit ("CPU"), electric power regulator, etc. For each turn of revolution of the tire 11, the RF tag 27 is supplied from the generator 23 with a positive electric power A in the form of a single pulse, so that the pulse sensor of the RF tag 27 outputs a detection pulse to the CPU each time when the electric power A exceeding a predetermined threshold S is detected.

When the CPU is supplied with a detection pulse from the pulse sensor, the CPU outputs an increment signal to a memory 29 that is connected to the controller 28 so as that an increment "1" is added to the data stored by the memory 29 and the stored data of the memory 29 is renewed. As a result, the memory 29 serves to store the data indicating the total number of pulses A accumulated after the previous resetting of the memory 29 to zero, i.e., the cumulative number of revolution of the tire 11. The electric power generated by the generator 23 is charged to the electric power regulator comprised of a capacitor or the like, and may be used as the operating energy for the pulse sensor, CPU, etc., whenever necessary.

The RF tag 27 is a tag or label for exchanging information by a short-distance wireless communication using a radio wave or electromagnetic field, so that the RF tag 27 includes an antenna 30 or an antenna coil for the wireless communication. The memory 29, in turn, is typically comprised of a non-volatile programmable flash memory (flash EEPROM).

Since the RF tag 27 is arranged on the inner surface of the bead portion 13 of the tire 11, wherein an increment "1" is added to the data stored in the memory 29 for renewing the data thereof, each time when the pulse A of the voltage or electric power generated by the generator 23 exceeds a predetermined threshold S, the RF tag 27 is more positively protected from damages as compared to the arrangement on the outer surface of the tire 11, and the RF tag 27 can be more easily installed as compared to an embedding arrangement inside the tire 11.

Reference numeral 34 denotes a portable-type external communication system, which can be brought by an operator or inspector to a position adjacent to the tire 11 and rim 17 in their stationary state, and then operated so that the electromagnetic wave emitted form the communication system 34 is received by the antenna 30 of the RF tag 27. On this occasion, the controller 28 reads out the data stored by the memory, i.e., the cumulative number of revolution of the tire 11, and transmits the data to the communication system 34 as being carried by the reflection wave from the antenna 30.
In this way, when the external communication system 34 is connected to the RF tag 27 by wireless communication, the system 34 receives the data stored by the memory 29.

Here, the external communication system 34 is preferably comprised of a tag reader having only the reading function, or of a tag reader/writer having the writing function in addition to the reading function, because they are commercially available on the marketplace at low cost and can be used as they are, i.e., without any modification.
As the power source energy to be supplied to the controller 28 or the like during reading-out of the data of the memory 29, there may be used the electric power which has been either generated by the generator 23 and stored in the above-mentioned electric power regulator, or the electromagnetic energy emitted from the communication system 34, which has been received by the antenna 30 and stored in the regulator. While a passive-type RF tag 27 is used in the illustrated embodiment, there may also be used an active-type RF tag with a built-in battery as the power source.

As explained above, the electric power generator 23 is arranged in the sidewall portion 14 of the tire 11, where the degree of deformation of the tire 11 in contact with the ground is the maximum. It is therefore readily possible for the electric power generator 23 to generate electric power of a sufficient level. On the other hand, the RF tag 27 is arranged in the bead portion 13 of the tire 11, where the degree of deformation of the tire 11 in contact with the ground is the minimum. It is therefore readily possible to minimize the stresses exerted to the RF tag 27 from the tire 11, thereby ensuring a prolonged duration of life of the RF tag 27. In the present invention, furthermore, there may be provided other sensors, e.g., temperature sensor, pressure sensor, etc., on the inner surface of the tire 11 at the bead portion 13 so that the parameters detected by these sensors are also stored in the memory 29 by the controller 28 of the RF tag 27, and supplied to the communication system 34 whenever necessary.

The operation of the embodiment described above will be explained below. It is assumed that the pneumatic tire 11 provided with the electric power generator 23 and the RF tag 27 is revolving due to the running of the vehicle to which the tire is mounted. On this occasion, during each turn of the tire revolution of the tire 11, when the region of the sidewall portion 14 provided with the generator 23 is brought to the stepping-in side and undergoes a crushing deformation, an electric power is generated by the generator 23 as a single pulse of positive voltage. The electric power A is supplied to the controller 28 of the RF tag 27, which is connected to the generator 23 via a connection wire 24, such that each time when it has been detected by the pulse sensor that the electric power A exceeds a predetermined threshold S, a detection pulse is supplied to the CPU.

In this way, when the CPU is supplied with a detection pulse from the pulse sensor, the CPU adds an increment "1" to the data stored in the memory 29 and renew the data of the memory 29. As a result, the memory 29 serves to store the data indicative of the total number of pulses A supplied to the memory 29 after it has been previously reset to zero, i.e., the cumulative number of revolution of the tire 11. Here, the CPU and the like are operated by the energy of the electric power stored in the electric power regulator.

When the cumulative number of revolution of the tire 11 is to be detected, the external communication system 34 is brought by an operator or inspector to a position adjacent to the tire 11 and rim 17 in their stationary state, and then operated so that the electromagnetic wave emitted form the communication system 34 is received by the antenna 30 of the RF tag 27. On this occasion, the controller 28 reads out the data stored by the memory, i.e., the cumulative number of revolution of the tire 11, and transmits the data to the communication system 34 as being carried by the reflection wave from the antenna 30. In this way, when the external communication system 34 is connected to the RF tag 27 by wireless communication, the system 34 receives the data stored by the memory 29.

### INDUSTRIAL APPLICABILITY

The present invention can be applied to a technical field wherein the number of tire revolution is detected by obtaining the data from an RF tag that is provided in a tire.

## Claims

1. A tire revolution detecting system comprising:
an electric power generator provided for a tire, for generating an electric power under a ground-contact deformation of the tire; and
an RF tag provided for the tire, and including a memory for storing a data representing the number of revolution the tire has experienced, said RF tag being for adding a predetermined increment to the data of the memory and renewing the data each time when a voltage of the electric power generated by the electric power generator exceed a predetermined level, and for transmitting the data of the memory to an external communication system, when the tire revolution detecting system is connected to the external communication system through a wireless communication;
wherein the electric power generator is provided in a sidewall portion of the tire, and the RF tag is provided in a bead portion of the tire.

2. The tire revolution detecting system according to claim 1, wherein the electric power generator comprises a piezoelectric element, which is compressed by a deformation of the sidewall portion when the tire is in contact with the ground, to generate the electric power.

3. The tire revolution detecting system according to claim 1, wherein the external communication means comprises one of a tag reader and a tag reader/writer.

4. The tire revolution detecting system according to any one of claims 1 to 3, wherein the electric power generator is fixedly secured to an inner surface of the sidewall portion of the tire, and the RF tag is fixedly secured to an inner surface of the bead portion of the tire.
